# EUROPÄISCHE PATENTSCHRIFT

(11) **EP 1 582 447 B1**
(45) Veröffentlichungstag und Bekanntmachung des Hinweises auf die Patenterteilung: **04.02.2009**
(21) Anmeldenummer: 05006975.6
(22) Anmeldetag: 31.03.2005
(51) Int. Cl.: B62K 9/00, B62K 21/00

(54) **Kinderfahrzeug-Gabelkopf**
Steering head for childs vehicle
Jeu de direction pour véhicule d'enfant

(30) Priorität: 03.04.2004 DE 102004016504
(43) Veröffentlichungstag der Anmeldung: 05.10.2005
(73) Patentinhaber: Franz Schneider GmbH & Co. KG, 96465 Neustadt b. Coburg (DE)
(72) Erfinder: Schneider, Gernold, 96465 Neustadt b. Coburg (DE)
(74) Vertreter: Flosdorff, Jürgen

(56) Entgegenhaltungen:
- WO-A-02/076814
- DE-A1- 19 962 468
- US-A- 2 231 546
- US-A- 4 674 761
- US-A1- 2002 089 144

## Beschreibung

Die Erfindung betrifft einen Kinderfahrzeug-Gabelkopf mit einem an dem Fahrzeugrahmen angesetzten Gabelrohr, in dem drehbar eine Lenkstange gelagert ist, an der ein Lenker und eine Radgabel angebracht sind, wobei das Gabelrohr eine obere und eine untere Lagerbuchse aufweist, die drehfest mit dem Gabelrohr verbunden sind.

Bei dem Kinderfahrzeug handelt es sich insbesondere um ein Fahrrad oder Dreirad, wobei das letztere häufig dann von einer Schubstange geschoben wird, wenn auf dem Dreirad ein kleines Kind sitzt.

Da kleine Kinder häufig noch nicht in der Lage sind, das Vorderrad ihres Dreirades in die geradlinige Bahn zu lenken, die durch den Vorschub mit der Schubstange beabsichtigt ist, kann es leicht zu unbeabsichtigten Lenkausschlägen kommen, die die Gefahr mit sich bringen, daß das Dreirad seitlich kippt. Auch wenn dies nicht der Fall ist, ist es schwierig und zeitraubend, auf diese Weise zu dem beabsichtigten Ziel zu gelangen.

WO 02/076814A offenbart einen Kinderfahrzeug-Gabelkopf gemäß dem Oberbegriff des Patentanspruchs 1. Die Druckschrift befasst sich mit einer Lenkstangenverriegelung, die bei der Kopplung eines Kinderfahrrades mit einem Erwachsenenfahrrad automatisch betätigt wird. Dabei ist ein Kopplungselement an dem Gabelrohr befestigt, in dem Bügel verschraubt sind, die das Gabelrohr umgreifen. Beim Anbringen einer Verbindungsstange zwischen dem Erwachsenenfahrrad und dem Kinderfahrrad an dem Kopplungselement wird infolge einer Kippbewegung der Verbindungsstange gegenüber der Lenkstange des Kinderfahrzeugs automatisch ein Verriegelungsstift in ein Loch in der Lenkstange eingeführt.

Der vorliegenden Erfindung liegt die Aufgabe zugrunde, einen Kinderfahrzeug-Gabelkopf anzugeben, bei dem mit einfachen baulichen Maßnahmen die Möglichkeit zur Arretierung der Lenkstellung des Vorderrads in Geradeausrichtung des Kinderfahrzeugs gegeben ist, wobei diese Arretierung auf einfache und zuverlässige Weise erfolgen kann.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß das Gabelrohr eine Aussparung, bevorzugt in Form eines Langlochs, aufweist, daß außen an dem Gabelrohr im Bereich dieses Langlochs ein Halte- und Führungselement angebracht ist, das ebenfalls eine Aussparung, bevorzugt in Form eines Langlochs, aufweist, das sich mit dem Langloch des Gabelrohrs überdeckt, daß die Lenkstange ebenfalls mit einer Aussparung versehen ist, die schmaler ist als die beiden Langlöcher und bevorzugt die Form eines axial verlaufenden Schlitzes hat, wobei sich dieser Schlitz in der Drehlage der Lenkstange, in der das zugehörige Rad in Längsrichtung des Kinderfahrzeugs verläuft, mittig mit den Langlöchern überdeckt, und daß auf dem Halte- und Führungselement ein Betätigungsknopf mit einem Arretierungselement sitzt, wobei der Betätigungsknopf zwischen einer in Richtung des Gabelrohrs vorgeschobenen und einer von dem Gabelrohr zurückgezogenen Position bewegbar ist und das Arretierungselement in der zurückgezogenen Position die Langlöcher des Gabelrohrs und des Halte- und Führungselementes durchgreift und in der vorgeschobenen Position außerdem in den Längsschlitz der Lenkstange eingreift.

Der Betätigungsknopf sitzt dabei bevorzugt an der vorderen Stirnseite des Gabelrohrs, wobei die vertikale Symmetrieachse des Betätigungsknopfs und des daran angesetzten Arretierungselementes auf der Längsmittelachse des Kinderfahrzeugs angeordnet ist. Der Betätigungsknopf ist damit für eine Bedienungsperson leicht zugänglich und die Rastposition der Lenkstange leicht einstellbar, indem das zugehörige Vorderrad exakt auf die Längsrichtung des Fahrzeugs eingestellt wird, in der das Kinderfahrzeug nach Arretierung der Lenkstange geradeaus fährt. Der Betätigungsknopf ist zum Verriegeln der Lenkstellung auf seinem Halte- und Führungselement einwärts zu drücken, d.h. senkrecht zur Längsrichtung des Gabelrohrs, und zur Freigabe der Lenkstange zurückzuziehen. In beiden Positionen rastet der Betätigungsknopf leicht lösbar auf dem Halte- und Führungselement ein. Damit ist der Verriegelungsmechanismus kinderleicht zu bestätigen.

Weiter ist erfindungsgemäß vorgesehen, dass die untere Lagerbuchse des Gabelrohrs, die ebenso wie die obere Lagerbuchse bevorzugt aus Kunststoff besteht, einen hülsenförmigen Ansatz aufweist. Der hülsenförmigen Ansatz ragt in das Gabelrohr und hat einen solchen Innendurchmesser, daß die Hülse praktisch ohne Spiel die Lenkstange umgreift und lagert. Der hülsenförmige Ansatz hat erfindungsgemäß ebenfalls eine Aussparung, die bevorzugt die Form eines Längsschlitzes hat und sich mit den beiden Langlöchern des Gabelrohrs und des Halte- und Führungselementes überdeckt. Der Längsschlitz des hülsenförmigen Ansatzes hat bevorzugt dieselben Abmessungen wie der Längsschlitz der Lenkstange und befindet sich an einer entsprechenden Position in Längsrichtung des Gabelkopfs. Erfindungsgemäß sind ferner an der Lagerbuchse am Rand des Längsschlitzes Führungsstege für das Arretierungselement angeformt, die sich radial nach außen bis in die Nähe des Gabelrohrs erstrecken, so daß zwischen ihnen das Arretierungselement bevorzugt allseitig geführt ist. Dies trägt zu einem robusten Aufbau des Arretierungsmechanismus bei.

Weiter ist vorgesehen, daß das Halte- und Führungselement Federarme aufweist, mit denen dieses Element in das Langloch des Gabelrohrs eingerastet ist. Bevorzugt sind zwei Federarme an den Längsrändern des Langlochs angeformt.

Das Halte- und Führungselement liegt mit einer querschnittlich kreisbogenförmigen Anlagefläche an dem Gabelrohr an und hat einen nach außen abstehenden Rahmenteil, der bevorzugt eine quadratische Grundrißform mit gerundeten Ecken hat und der von einem entsprechend geformten Rahmenteil des Betätigungsknopfes außen übergriffen wird, wobei die beiden Rahmenteile gleitfähig aneinander anliegen. Die beiden Rahmenteile haben zusammenwirkende Rastelemente für die vorgeschobene Arretierungsposition und die zurückgezogene Freigabeposition des Arretierungselementes. Bevorzugt sind in zwei gegenüberliegenden Außenwänden des inneren Rahmenteils zwei voneinander beabstandete, parallele Nuten ausgebildet, während an entsprechenden Innenwänden des äußeren Rahmenteils je eine leicht vorstehende Leiste angeformt ist. Die Anordnung kann natürlich auch umgekehrt getroffen werden.

Das Arretierungselement ist bevorzugt ein innen an der Stirnwand des Betätigungsknopfes mittig angesetzter Arretierungssteg, der die Form eines querschnittlich flachen Stiftes geringer Dicke und dem gegenüber verhältnismäßig großer Breite hat, wobei diese Form den Längsschlitzen der Lenkstange und des hülsenförmige Ansatzes der unteren Lagerbuchse entspricht. Innen an dem Rahmenteil des Halte- und Führungselementes sind bevorzugt zwei Führungsstege für das Arretierungselement angeformt, die sich in der Aufsicht gesehen in das Langloch hinein erstrecken und einen solchen Zwischenraum zwischen sich freilassen, daß zwischen diesen Stegen das Arretierungselement geführt ist. Auch dies trägt zur Stabilität des Arretierungsmechanismus, insbesondere des Arretierungselementes bei, so daß die bevorzugt aus Kunststoff bestehenden Bauelemente dauerhaft den Belastungen standhalten.

Außerdem sollte bei einem Kinderfahrzeug der betrachteten Art gewährleistet sein, daß der Lenkerausschlag nicht so groß werden kann, daß das Fahrzeug kippt, wenn ein Kind ohne Führung durch eine Schubstange das Fahrzeug fährt. Zu diesem Zweck wird vorgeschlagen, daß die untere Lagerbuchse in ihrer ringförmigen, nach oben zurückversetzten Bodenwand eine kreisbogenförmige Vertiefung oder Nut aufweist, und daß an einem Gegenlager, das drehfest mit der Radgabel verbunden ist, ein Ansatz in axialer Richtung nach oben vorsteht, der in die kreisbogenförmige Vertiefung oder Nut eingreift. Diese Vertiefung oder Nut erstreckt sich etwa über 90° und begrenzt durch die beiden seitlichen Enden der Vertiefung oder Nut den Lenkausschlag in beiden Richtungen auf etwa 45°. Das Gegenlager kann dabei drehfest mit einer Radabdeckung (Schutzblech) verbunden sein, die ihrerseits so an der Radgabel befestigt ist, daß sie gemeinsam mit dieser und der Lenkstange drehbar ist.

Die Bestandteile des Verriegelungsmechanismus sind kostengünstig herstellbar und mit geringem Aufwand zu montieren.

Weitere Einzelheiten der Erfindung ergeben sich aus der nachfolgenden Beschreibung einer bevorzugten Ausführungsform des Gabelkopfes. Dabei zeigen:

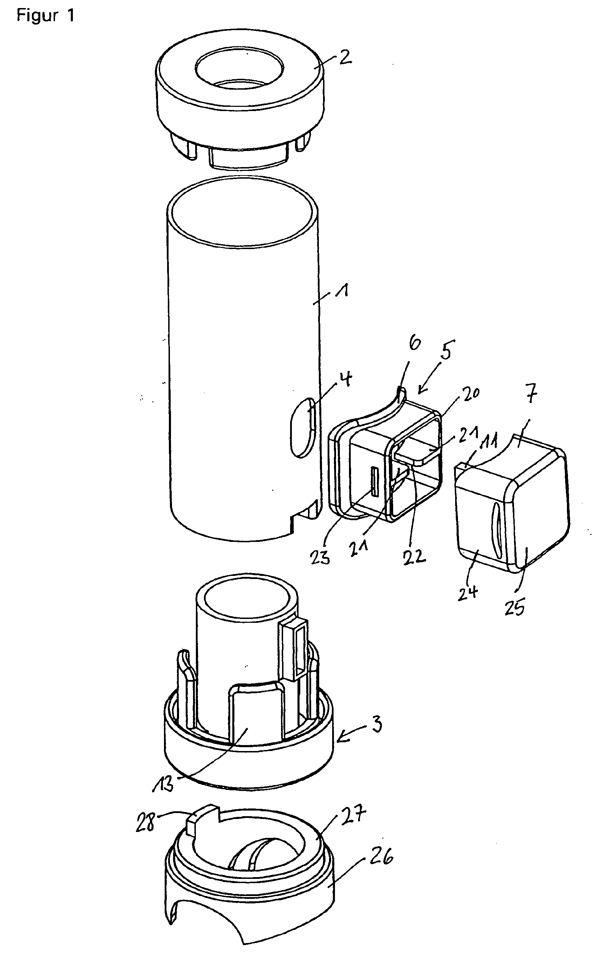

- Figur 1: die Einzelteile eines Gabelkopfs in auseinandergezogener Darstellung in einer perspektivischen Ansicht;

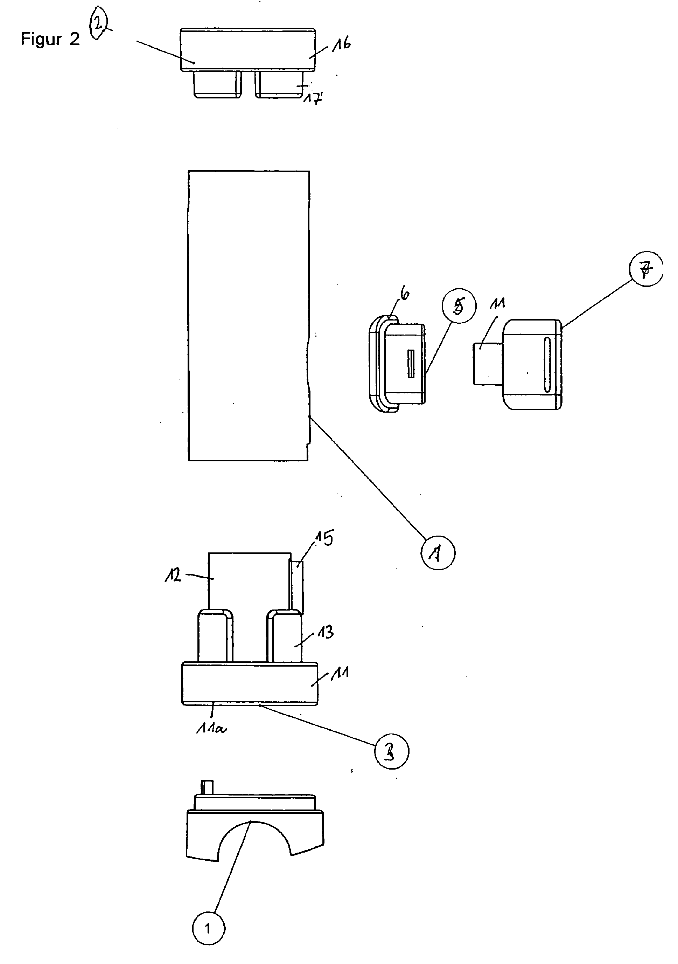

- Figur 2: die Teile gemäß Figur 1 in einer Seitenansicht und

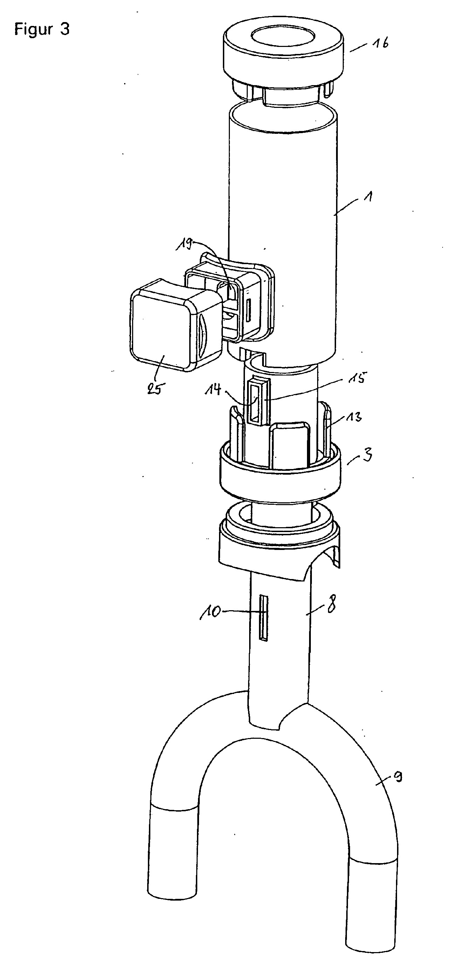

- Figur 3: eine weitere perspektivische Ansicht des Gabelkopfs mit zugehöriger Lenkstange und Radgabel.

Der erfindungsgemäße Gabelkopf enthält ein Gabelrohr 1 aus Metall, das einstückig mit dem nicht dargestellten Fahrzeugrahmen eines Kinderfahrzeugs, bevorzugt eines Dreirads, ausgebildet ist. In das Gabelrohr 1 sind eine obere Gleitlagerbuchse 2 und eine untere Gleitlagerbuchse 3 eingesetzt, die die Lenkstange drehbar lagern, an der ein Lenker und eine Radgabel angebracht sind.

Das Gabelrohr 1 enthält ein Langloch 4 an der dem angesetzten Fahrzeugrahmen diametral gegenüberlegenden Stelle, so daß die Mittellängsachse des Langlochs 4 mit der Mittellängsachse des nicht dargestellten Rahmens zusammenfällt. An dem Langloch 4 ist ein Halte- und Führungselement 5 befestigt, indem zwei Federarme, die von der querschnittlich kreisbogenförmigen Basisplatte 6 des Halte- und Führungselementes 5 vorstehen, in das Langloch 4 eingeführt und aufeinander zu elastisch ausgebogen werden, wobei sie nach Passieren der Wand des Gabelrohrs 1 zurückfedern und mit hakenförmigen seitlichen Vorsprüngen die Wand des Gabelrohrs 1 hintergreifen.

Auf dem Halte- und Führungselement 5 sitzt ein Betätigungsknopf 7, der bezüglich des Gabelrohrs 1 vorwärts und rückwärts bewegbar ist, um die Lenkstange 8 (Figur 4) zu verriegeln oder frei zu geben.

Die aus Metall bestehende Lenkstange 8, an deren unterem Ende die Radgabel 9 angesetzt ist, enthält einen Längsschlitz 10 in Form eines langgestreckten Rechtecks. In diesen Längsschlitz 10 greift - wie weiter unten näher beschrieben wird - ein Arretierungselement 1 ein, das an dem Betätigungsknopf 7 angesetzt ist.

Die aus Kunststoff bestehende untere Gleitlagerbuchse 3 enthält einen unteren ringförmigen Abschnitt 11, der in der Einbaulage den unteren Randbereich des Gabelrohrs 1 dicht umschließt und der über gegenüber dem unteren Rand 11a nach oben versetzten Ringabschnitt in einen hülsenförmigen Ansatz 12 übergeht, der seinerseits mit seiner zylindrischen Innenwand die Lenkstange 8 dicht umgreift, so daß diese drehbar in dem hülsenförmigen Abschnitt 12 gelagert ist.

Von dem in der Zeichnung nicht zu erkennenden Ringabschnitt erstrecken sich querschnittlich kreisbogenförmige Zungen 13 nach oben, die in der Einbaulage der unteren Lagerbuchse 3 an der Innenwand des Gabelrohrs 1 anliegen.

Der hülsenförmige Ansatz 12 der unteren Lagerbuchse 3 enthält einen Längsschlitz 14 durch seine Wand, der in derselben Höhenlage ausgebildet ist wie der Schlitz 10 der Lenkstange 8, so daß die beiden Schlitze 10 und 14 miteinander fluchten, wenn die Lenkstange 8 so ausgerichtet ist, daß das Kinderfahrzeug exakt geradeaus fährt. Der Schlitz 14 ist von einem rechteckigen Rahmen 15 umgeben, der sich radial nach außen bis in die Nähe der Innenwand des Gabelrohrs 1 erstreckt.

Die obere Lagerbuchse 2, die ebenfalls aus Kunststoff besteht, enthält einen ringförmigen Abschnitt 16, der den oberen Randbereich des Gabelrohrs 1 dicht umschließt, und Zungen 17, die dicht an der Innenwand des Gabelrohrs 1 anliegen.

Das Halte- und Führungselement 5, das in der Einbaulage mit seiner Basiswand 6 dicht an dem Gabelrohr 1 anliegt, enthält in dieser Basiswand 6 ein Langloch 19, das etwas schmaler ist als das Langloch 4 des Gabelrohrs 1, da von den vertikalen Seitenrändern des Langlochs 19 die nicht dargestellten Federarme vorstehen, die durch das Langloch 4 führen und dessen beide vertikale Randbereiche hintergreift. An der Basiswand 6 ist außen ein quadratischer Rahmen mit abgerundeten Ecken angeformt, der sich zu der von dem Gabelrohr 1 abgewandten Seite erstreckt. Von den beiden vertikalen Wänden des Rahmens 20 erstrecken sich zwei aufeinander zu laufende Führungsstege 21, die zwischen sich einen Zwischenraum 22 freilassen, der im wesentlichen der Dicke des Arretierungselements 11 entspricht.

An den Außenseiten der beiden vertikalen Wände des Rahmens 20 ist jeweils ein leicht vorstehender vertikaler Steg 23 ausgebildet, der dazu dient, zwei verschiedene Positionen des verschieblich auf dem Rahmen 20 sitzenden Betätigungsknopfs 7 zu definieren.

Der Betätigungsknopf 7 sitzt mit einem Rahmen 24 verschieblich auf dem Rahmen 20 des Halte- und Führungselementes 5. An der Innenseite der Bodenwand 25 des Betätigungsknopfs 7 ist das Arretierungselement 11 angeformt, das querschnittlich eine solche Form hat, daß es durch Vorschub des Betätigungsknopfs 7 in Richtung des Gabelrohrs 1 in den Längsschlitz 10 der Lenkstange 8 eintreten kann. Das Arretierungselement 11 hat allgemein die Form eines plattenförmigen Zapfens.

Die vertikalen Wände des Rahmens 24 des Betätigungsknopfs 7 haben jeweils an übereinstimmenden Stellen zwei voneinander beabstandete Nuten, die zur Verrastung der Stege 23 in der Verriegelungsposition und der zurückgezogenen Freigabeposition vorgesehen sind.

Der Betätigungsknopf 7 und das Halte- und Führungselement 5 bestehen bevorzugt aus Kunststoff.

Dies ist auch bei dem Gegenlager 26 der Fall, das mit der Radgabel 9 und damit mit der Lenkstange drehfest verbunden ist. Das Gegenlager 26 greift mit einem oberen Ringabschnitt 27 in die Unterseite der unteren Lagerbuchse 3 ein.

Von dem Ringabschnitt 27 steht ein kreisbogenförmiger Vorsprung 28 nach oben vor, der in eine kreisbogenförmige Vertiefung der unteren Ringwand der Lagerbuchse 3 eingreift. Die seitlichen Enden der Vertiefung begrenzen somit den Lenkausschlag der Lenkstange 8 um einen vorgegebenen Winkel, der vorzugsweise in beiden Richtungen ca. 45° beträgt.

## Patentansprüche

1. Kinderfahrzeug-Gabelkopf, mit einem an dem Fahrzeugrahmen angesetzten Gabelrohr (1), in dem drehbar eine Lenkstange (8) gelagert ist, an der ein Lenker und eine Radgabel angebracht sind, wobei das Gabelrohr (1) eine obere und eine untere Lagerbuchse (2,3) aufweist, die drehfest mit dem Gabelrohr (1) verbunden sind,
wobei das Gabelrohr (1) eine erste Aussparung (4) aufweist,
wobei außen an dem Gabelrohr (1) im Bereich der ersten Aussparung (4) ein Halte- und Führungselement (5) mit einer zweiten Aussparung (19) angebracht ist, die sich mit der ersten Aussparung (4) überdeckt,
wobei die Lenkstange (8) mit einer dritten Aussparung (10) versehen ist, die sich in einer Drehlage der Lenkstange (8) mit den anderen Aussparungen (4,19) überdeckt, und
wobei auf dem Halte- und Führungselement (5) ein Betätigungsknopf (7) mit einem Arretierungselement (11) sitzt, der zwischen einer in Richtung des Gabelrohrs (1) vorgeschobenen und einer zurückgezogenen Position bewegbar ist, wobei das Arretierungselement (11) in der vorgeschobenen Verriegelungsposition in die dritte Aussparung (10) eingreift,
**dadurch gekennzeichnet,**
**dass** die untere Lagerbuchse (3) einen hülsenförmigen Ansatz (12) aufweist, der in das Gabelrohr (1) ragt und eine vierte Aussparung (14) aufweist, die sich mit der ersten und der zweiten Aussparung (4,19) überdeckt, und dass die vierte Aussparung (14) von Führungsstegen (15) für das Arretierungselement (11) umgeben ist, die sich radial nach außen zu dem Gabelrohr (1) erstrecken.

2. Kinderfahrzeug-Gabelkopf nach Anspruch 1,
**dadurch gekennzeichnet,**
**daß** das Halte- und Führungselement (5) Federarme aufweist, mit denen es in die erste Aussparung (4) eingerastet ist.

3. Kinderfahrzeug-Gabelkopf nach Anspruch 1 oder 2,
**dadurch gekennzeichnet,**
**daß** das Halte- und Führungselement (5) eine querschnittlich kreisbogenförmige Basiswand (6), die an dem Gabelrohr (1) anliegt, und einen nach außen abstehenden Rahmen (20) aufweist, der von einem Rahmen (24) des Betätigungsknopfs (7) dicht übergriffen wird, und daß die beiden Rahmen (20,24) zusammenwirkende Rastelemente (23) für die vorgeschobene und zurückgezogene Position des Betätigungsknopfs (7) aufweisen.

4. Kinderfahrzeug-Gabelkopf nach Anspruch 3,
**dadurch gekennzeichnet,**
**daß** an dem Rahmen (20) des Halte- und Führungselementes (5) zwei Stege (21) zur Führung des Arretierungselementes (11) angeformt sind.

5. Kinderfahrzeug-Gabelkopf nach einem der Ansprüche 1 bis 4,
**dadurch gekennzeichnet,**
**daß** das Arretierungselement (11) ein an der Stirnwand des Betätigungsknopfs (7) angesetzter Arretierungssteg ist.

6. Kinderfahrzeug-Gabelkopf nach einem der Ansprüche 1 bis 5,
**dadurch gekennzeichnet,**
**daß** die Aussparung (10) der Lenkstange (8) ein Schlitz ist, der den Arretierungssteg (11) mit geringem Spiel aufnimmt.

7. Kinderfiahrzeug-Gabelkopf nach einem der Ansprüche 1 bis 6,
**dadurch gekennzeichnet,**
**daß** die Lagerbuchsen (2,3) aus Kunststoff bestehen.

8. Kinderfahrzeug-Gabelkopf nach einem der Ansprüche 1 bis 7,
**dadurch gekennzeichnet,**
**daß** das Halte- und Führungselement (5) und der Betätigungsknopf (7) aus Kunststoff bestehen.

9. Kinderfahrzeug-Gabelkopf nach einem der Ansprüche 1 bis 8,
**dadurch gekennzeichnet,**
**daß** die unter Lagerbuchse (3) in ihrer ringförmigen Bodenwand eine kreisbogenförmige Vertiefung oder Nut mit zwei seitlichen Anschlagsflächen aufweist, wobei in die Vertiefung oder Nut ein in axialer Richtung vorstehender Ansatz (28) eines Gegenlagers (26) eingreift, der drehfest mit der Radgabel (7) verbunden ist.

## Claims

1. A steering head for a child's vehicle including a fork tube (1) attached to the vehicle frame, rotatably mounted in which is a steering bar (8), on which a handle bar and a wheel fork are mounted, wherein the fork tube (1) has a first opening (4), wherein attached externally to the fork tube (1) in the region of the first opening (4) there is a retaining and guide element (5) with a second opening (19), which overlaps with the first opening (4), wherein the steering bar (8) is provided with a third opening (10), which overlaps with the other openings (4,19) in one rotary position of the steering bar (8) and wherein situated on the retaining and guide element (5) there is actuating knob (7) with a locking element (11), which is moveable between an advanced position in the direction of the fork tube (1) and a retracted position, whereby the locking element (11) engages in the third opening (10) in the advanced locked position, **characterised in that** the lower bearing bush (3) has a sleeve-shaped formation (12), which projects into the fork tube (1) and has a fourth opening (14), which overlaps with the first and the second openings (4,19), and that the fourth opening (14) is surrounded by guide webs (15) for the locking element (11), which extend radially outwardly towards the fork tube (1).

2. A steering head for a child's vehicle as claimed in claim 1, **characterised in that** the retaining and guide element (5) has spring arms, with which it is locked in the first opening (4).

3. A steering head for a child's vehicle as claimed in claim 1 or 2, **characterised in that** the retaining and guide element (5) has a base wall (6), which is of circular arcuate shape in cross section and engages the fork tube (11), and has an outwardly projecting frame (20), over which a frame (24) of the actuating knob (7) snugly engages, and that the two frames, (20,24) have cooperating locking elements (23) for the advanced and retracted positions of the actuating knob (7).

4. A steering head for a child's vehicle as claimed in claim 3, **characterising in that** two webs (21) for guiding the locking element (11) are formed on the frame (20) of the retaining and guide element (5).

5. A steering head for a child's vehicle as claimed in one of claims 1 to 4, **characterised in that** the locking element (11) is a locking web attached to the end wall of the actuating knob (7).

6. A steering head for a child's vehicle as claimed in one of claims 1 to 5, **characterised in that** the opening (10) in the steering bar (8) is a slot, which receives the locking web (11) with a small clearance.

7. A steering head for a child's vehicle as claimed in one of claims 1 to 6, **characterised in that** the bearing bushes (2,3) consist of plastic material.

8. A steering head for a child's vehicle as claimed in one of claims 1 to 7, **characterised in that** the retaining and guide element (5) and the actuating knob (7) consist of plastic material.

9. A steering head for a child's vehicle as claimed in one of claims 1 to 8, **characterised in that** the lower bearing bush (3) has a circular arcuate recess or groove with two lateral abutment surfaces in its annular base wall, wherein engaging in the recess or groove there is a formation (28) on a support (26), which projects in the axial direction and is rotationally fixedly connected to the wheel fork (7).

## Revendications

1. Tête de fourche pour véhicule d'enfant, comportant un tube de direction (1), qui est monté sur le cadre du véhicule et dans lequel est logée de manière rotative une tige de direction (8), à laquelle sont attachés un guidon et une fourche de roue, le tube de direction (1) comportant un coussinet supérieur et inférieur (2, 3) qui sont assemblés de manière solidaire en rotation au tube de direction (1),
le tube de direction (1) comportant un premier évidement (4),
un élément de fixation et de guidage (5) étant disposé à l'extérieur sur le tube de direction (1) dans la zone du premier évidement (4) et étant muni d'un deuxième évidement (19), qui vient en recouvrement avec le premier évidement (4),
la tige de direction (8) étant munie d'un troisième évidement (10) qui, dans une position de rotation de la tige de direction (8), vient en recouvrement avec les autres évidements (4, 19), et
un bouton d'actionnement (7), étant posé sur l'élément de fixation et de guidage (5) et étant muni d'un élément d'arrêt (11) qui est mobile entre une position avancée vers le tube de direction (1) et une position en retrait, l'élément d'arrêt (11) s'engageant dans le troisième évidement (10) dans la position de verrouillage avancée,
**caractérisée en ce que** le coussinet inférieur (3) comporte une saillie (12) en forme de manchon, qui s'engage dans le tube de direction (1), et un quatrième évidement (14), qui vient en recouvrement avec le premier et le deuxième évidement (4, 19), et **en ce que** le quatrième évidement (14) est entouré par des arêtes de guidage (15) pour l'élément d'arrêt (11), lesquelles s'étendent dans le sens radial vers l'extérieur vers le tube de direction (1).

2. Tête de fourche pour véhicule d'enfant selon la revendication 1, **caractérisée en ce que** l'élément de fixation et de guidage (5) comporte des bras flexibles, par lesquels ledit élément est encliqueté dans le premier évidement (4).

3. Tête de fourche pour véhicule d'enfant selon la revendication 1 ou 2, **caractérisée en ce que** l'élément de fixation et de guidage (5) comporte une paroi de base (6), ayant une section en forme d'arc de cercle et étant en appui contre le tube de direction (1), et un cadre (20), qui forme saillie vers l'extérieur et qui est enserré étroitement par un cadre (24) du bouton d'actionnement (7), et **en ce que** les deux cadres (20, 24) comportent des éléments d'encliquetage (23) coopérant entre eux pour la position avancée et la position en retrait du bouton d'actionnement (7).

4. Tête de fourche pour véhicule d'enfant selon la revendication 3, **caractérisée en ce que** sur le cadre (20) de l'élément de fixation et de guidage (5) sont formées deux nervures (21) destinées au guidage de l'élément d'arrêt (11).

5. Tête de fourche pour véhicule d'enfant selon l'une quelconque des revendications 1 à 4, **caractérisée en ce que** l'élément d'arrêt (11) est une nervure d'arrêt agencée sur la paroi frontale du bouton d'actionnement (7).

6. Tête de fourche pour véhicule d'enfant selon l'une quelconque des revendications 1 à 5, **caractérisée en ce que** l'évidement (10) de la tige de direction (8) est une fente, qui reçoit avec un faible jeu la nervure d'arrêt (11).

7. Tête de fourche pour véhicule d'enfant selon l'une quelconque des revendications 1 à 6, **caractérisée en ce que** les coussinets (2, 3) sont réalisés en matière plastique.

8. Tête de fourche pour véhicule d'enfant selon l'une quelconque des revendications 1 à 7, **caractérisée en ce que** l'élément de fixation et de guidage (5) et le bouton d'actionnement (7) sont réalisés en matière plastique.

9. Tête de fourche pour véhicule d'enfant selon l'une quelconque des revendications 1 à 8, **caractérisée en ce que** le coussinet inférieur (3), dans sa paroi de fond annulaire, comporte un creux ou une rainure en forme d'arc de cercle, avec deux surfaces de butée latérales, sachant que dans le creux ou la rainure s'engage une saillie (28), orientée dans la direction axiale, d'une contre-butée (26) qui est assemblée de manière solidaire en rotation avec la fourche de roue (7).
